# EUROPÄISCHE PATENTSCHRIFT

(11) **EP 0 741 192 B1**
(45) Veröffentlichungstag und Bekanntmachung des Hinweises auf die Patenterteilung: **19.05.1999**
(21) Anmeldenummer: 96104946.7
(22) Anmeldetag: 28.03.1996
(51) Int. Cl.: C22B 19/04, C22B 19/28, C22B 5/14, C22B 7/02

(54) **Verfahren zur Aufarbeitung von zink- und eisenoxidhaltigem Reststoff**
Method for working up zinc and iron oxide bearing residual material
Procédé de traitement de matière résiduelle contenant du zinc et de l'oxyde de fer

(30) Priorität: 05.05.1995 DE 19516558
(43) Veröffentlichungstag der Anmeldung: 06.11.1996
(73) Patentinhaber: Metallgesellschaft Aktiengesellschaft, 60325 Frankfurt am Main (DE)
(72) Erfinder: Orth, Andreas, Dr., 61381 Friedrichsdorf (DE); Weber, Peter, 63546 Hammersbach (DE); Härter, Uwe, Dr., 46539 Dinslaken (DE); Wallis, Ernst, Dr., 65760 Eschborn (DE)

(56) Entgegenhaltungen:
- EP-A- 0 434 120
- EP-A- 0 626 457
- US-A- 4 396 423
- DATABASE WPI Section Ch, Week 9536 Derwent Publications Ltd., London, GB; Class M24, AN 95-273145 XP002010847 & JP-A-07 173 549 ( KAWASAKI STEEL CORP) , 11.Juli 1995
- PATENT ABSTRACTS OF JAPAN vol. 008, no. 273 (C-256), 13.Dezember 1984 & JP-A-59 145740 (MITSUBISHI KINZOKU KK), 21.August 1984,

## Beschreibung

Die vorliegende Erfindung betrifft ein Verfahren zur Aufarbeitung von zink- und eisenoxidhaltigem Reststoff.

Aus DE-OS 43 17 578 ist ein Verfahren zur Aufarbeitung von Zink und Blei enthaltenden Hüttenwerk-Reststoffen bekannt. Die Aufarbeitung von Zink und Blei enthaltenden Hüttenwerk-Reststoffen erfolgt dabei durch thermische Behandlung des granulierten Reststoffes in einer zirkulierenden Wirbelschicht, wobei der Wärmebedarf durch Verbrennung von festem Kohlenstoff im Wirbelschichtreaktor der zirkulierenden Wirbelschicht erfolgt. Der Gehalt an festem Kohlenstoff im unteren Teil der Wirbelschicht wird auf 5 bis 30 % eingestellt. In den oberen Teil des Wirbelschichtreaktors werden sauerstoffhaltige Gase eingeleitet und die CO₂-Bildung nur so weit geführt, daß metallisches Zink nicht oxidiert wird. Die ausgetragene Suspension wird in einem Rückführzyklon weitgehend von Feststoff befreit und der Feststoff zurückgeleitet. Das Gas wird auf eine Temperatur abgekühlt, bei der das metallische Zink zu ZnO oxidiert wird, und die staubförmigen Zink- und Bleiverbindungen werden aus dem Gas abgeschieden.

Bei dem bekannten Verfahren werden bis zu 85 Gew.-% des im eisenoxidhaltigen Reststoff vorhandenen Zinks verflüchtigt. Im aufbereiteten eisenoxidhaltigen Reststoff sind daher noch 0,15 Gew.-% Zink vorhanden. Diese Zinkmenge ist im nachfolgenden Hochofenprozeß aufgrund der ablaufenden Zinkkreisläufe und Anbackungen sowie erhöhtem Kostenverbrauch störend.

Aufgabe der vorliegenden Erfindung ist es, ein wirtschaftliches und umweltschonendes Verfahren zur Aufarbeitung von zink- und eisenoxidhaltigen Reststoffen bereitzustellen.

Die Aufgabe der vorliegenden Erfindung wird dadurch gelöst, daß
a) zink- und eisenoxidhaltiger Staub und/oder Schlamm mit Wasser granuliert wird,
b) Granalien gemäß Verfahrensstufe (a) und kohlenstoffhaltiges Material in ein System der zirkulierenden Wirbelschicht eingetragen werden,
c) die im System der zirkulierenden Wirbelschicht im Kreislauf geführte Gas-Feststoff-Suspension in eine zweite Wirbelschicht eingetragen wird,
d) der aus der zweiten Wirbelschicht ausgetragene Feststoff in den Reaktor der zirkulierenden Wirbelschicht zurückgeleitet wird,
e) 50 bis 75 Vol.-% des zur Vergasung des kohlenstoffhaltigen Materials erforderlichen Sauerstoffs als Fluidisierungsgas in den Reaktor der zirkulierenden Wirbelschicht und 25 bis 50 Vol.-% des Sauerstoffs als Fluidisierungs- und Sekundärgas in die zweite Wirbelschicht eingetragen werden,
f) eisenoxidhaltiges Material aus dem Reaktor der zirkulierenden Wirbelschicht ausgetragen und zinkhaltiges Material mit dem Abgas aus dem System der zirkulierenden Wirbelschicht abgeführt werden.

Der Vorteil der vorliegenden Erfindung liegt gegenüber dem bekannten Verfahren darin, daß der Anteil an Zink in dem aus dem Reaktor der zirkulierenden Wirbelschicht ausgetragenen eisenoxidhaltigen Material < 0,10 Gew.-% beträgt. Ein weiterer Vorteil der vorliegenden Erfindung liegt darin, daß größere Mengen an Zink verflüchtigt werden. Es können somit größere Mengen an Zink gewonnen und wirtschaftlich genutzt werden.

Im Sinne der Erfindung kann Schlamm aus der Entstaubung von Hochofengichtgasen sowie Staub aus den Entstaubungsanlagen von Stahlwerken, von Sinteranlagen sowie Schlamm, der bei der Weiterverarbeitung von Rohstahl anfällt, als Ausgangsmaterial verwendet werden. Bei der erfindungsgemäßen Aufarbeitung werden zwei Fraktionen erhalten. Eine oxidreiche Fraktion, deren Gehalt an Zink-, Blei- und Alkalimetall-Verbindungen soweit herabgesetzt ist, daß das Material einem Hochofenprozeß zugeführt werden kann. Eine zweite Fraktion, deren Gehalt an Zink und Blei > 30 Gew.-% nach Abtrennung von Kohlenstoff liegt, so daß diese Fraktion zur Erzeugung der genannten Metalle aus Sekundärrohstoffen genutzt werden kann. Der zur Verbrennung notwendige Sauerstoff wird in einem Anteil von 50 bis 75 Vol.-% vom Boden des Reaktors der zirkulierenden Wirbelschicht zugeführt. Die restliche Menge Sauerstoff wird in die zweite Wirbelschicht als Fluidisierungs- und Sekundärgas eingeleitet. Der erforderliche Sauerstoff kann in Form von mit Sauerstoff angereicherter Luft oder technischem Sauerstoff eingeleitet werden. Beide Gasströme werden außerhalb der Reaktoren in Vorwärmstufen auf Temperaturen > 650°C vorgewärmt.

Über die Parameter Materialeintrag und Druckdifferenz über Reaktorhöhe wird eine ausreichende Verweilzeit des Materials im System der zirkulierenden Wirbelschicht gewährleistet. Die Druckdifferenz des Reaktors, die proportional zum Materialinhalt des Reaktors ist, wird über kontinuierlichen Abzug von Material am Reaktorboden geregelt. Als Austragungsorgan dient ein drehzahlgeregelter und wassergekühlter Schneckenförderer. Die Abdichtung zur Atmosphäre erfolgt dabei zum einen über die Materialsäule im Schneckeneinlauf, zum zweiten über einen Stopfen, der sich im Schneckenauslauf bildet, wobei letzterer mit einer Klappe versehen ist. Das Anpaßgewicht der Klappe kann von außen über das Auflegen verschieden schwerer Gewichte geändert werden.

Das System der zirkulierenden Wirbelschicht besteht aus dem Reaktor, einem ersten Zyklon, aus dem das abgeschiedene Material über die zweite Wirbelschicht in den Reaktor der zirkulierenden Wirbelschicht im unteren Drittel zurückgeführt wird. Das System der zirkulierenden Wirbelschicht weist einen zweiten Zyklon auf, aus dem das abgeschiedene Material direkt in den Reaktor der zirkulierenden Wirbelschicht und/oder über die zweite Wirbelschicht in den Reaktor der zirkulierenden Wirbelschicht zurückgeführt werden kann. Die Druckabdichtung vom zweiten Zyklon zum Reaktor der zirkulierenden Wirbelschicht erfolgt hierbei mit der Materialsäule im Einlauf und stopfenbildender Schnecke. Hierfür können auch Pendelklappen verwendet werden. Aus dem zweiten Zyklon kann ein Teilstrom direkt ausgeschleust werden. Durch eine direkte Ausschleusung eines Teilstroms kann die zum Reaktor der zirkulierenden Wirbelschicht zurückgeführte Menge an Material geregelt werden.

Eine vorteilhafte Ausgestaltung der Erfindung ist, daß gemäß Verfahrensstufe (a) der Wassergehalt des eisenoxidhaltigen Staubs und/oder Schlamms vor der Granulierung auf < 13 Gew.-% eingestellt wird. Bei diesem Wassergehalt werden gute Ergebnisse bei der Korngrößenverteilung der Granalien erzielt.

Eine vorteilhafte Ausgestaltung der Erfindung ist, daß gemäß Verfahrensstufe (a) Granalien mit einer Korngröße von 0,1 bis 3,0 mm hergestellt werden. Mit Granalien in diesem Korngrößenbereich werden besonders gute Ergebnisse bei der Behandlung im Reaktor der zirkulierenden Wirbelschicht erzielt.

Eine vorteilhafte Ausgestaltung der Erfindung ist, daß die Granalien vor der Einleitung in den Reaktor der zirkulierenden Wirbelschicht auf einen Wassergehalt < 10 Gew.-% getrocknet werden. Durch diese Maßnahme wird eine Energieeinsparung erzielt. Die Granalien mit diesem geringen Wassergehalt weisen gute Ergebnisse bei der Eintragung in den Reaktor der zirkulierenden Wirbelschicht auf.

Eine vorteilhafte Ausgestaltung der vorliegenden Erfindung ist, daß die Menge des kohlenstoffhaltigen Materials 20 bis 30 Gew.-% des Gesamteintrags in den Reaktor der zirkulierenden Wirbelschicht beträgt. Bei diesen Mengen für das kohlenstoffhaltige Material werden die günstigsten Reaktionsverhältnisse erreicht.

Eine vorteilhafte Ausgestaltung der Erfindung ist, daß gemäß Verfahrensstufe (b) die Temperatur im Reaktor der zirkulierenden Wirbelschicht auf 950 bis 1100°C, vorzugsweie 1000 bis 1050°C, eingestellt wird. Bei diesen Temperaturen werden gute Ergebnisse bei der Zinkverflüchtigung erreicht.

Eine vorteilhafte Ausgestaltung der Erfindung ist, daß gemäß Verfahrensstufe (b) das Verhältnis CO/CO₂ im Reaktor der zirkulierenden Wirbelschicht auf 1,1 bis 1,5, vorzugsweise 1,2 bis 1,4, eingestellt wird. Bei diesem Verhältnis von CO : CO₂ werden gute Ergebnisse bei der Verflüchtigung von Zink und gleichzeitig gute Ergebnisse bei der Reduktion von Eisen³⁺ zu Eisen²⁺ erreicht. Gleichzeitig wird weitgehend verhindert, daß Eisen³⁺ und Eisen²⁺ zu metallischem Eisen reduzieren. Im Reaktor wird durch teilweise Verbrennung von einem mit in das System eingebrachten Gemisch von Kohle und Koks eine Gesamtatmosphäre eingestellt, in der das Verhältnis von CO und CO₂ bei 1,2 bis 1,4 liegt.

Eine vorteilhafte Ausgestaltung der Erfindung ist, daß im System der zirkulierenden Wirbelschicht der stündliche Feststoffumlauf mindestens das 5-fache des im Reaktor befindlichen Feststoffgewichts beträgt.

Eine vorteilhafte Ausgestaltung der Erfindung ist, daß gemäß Verfahrensstufe (c) 70 bis 80 Gew.-% des kohlenstoffhaltigen Materials in die zweite Wirbelschicht eingetragen werden. Bei diesen Mengen für das kohlenstoffhaltige Material kann das Reduktionspotential im Reaktor der zirkulierenden Wirbelschicht günstig gesteuert werden. Durch die Steuerung des Reduktionspotentials werden gute Ergebnisse bei der Zinkverflüchtigung erreicht.

Erfindungsgemäß ist vorzugsweise vorgesehen, daß das gemäß Verfahrensstufe (f) aus dem Reaktor der zirkulierenden Wirbelschicht ausgetragene Material auf eine Temperatur von < 150°C gekühlt wird und das gekühlte Material mit Wasser versetzt wird.

Das ausgetragene Material wird in einem Kühlaggregat, wie z.B. einem Sektionalkühler, auf Umgebungstemperatur abgekühlt und vor dem Weitertransport zur Sinteranlage oder einem Schmelzaggregat in einem Durchlaufmischer auf einen Wert für den Wassergehalt von > 5 Gew.-% angefeuchtet.

Erfindungsgemäß ist weiter vorgesehen, daß das gemäß Verfahrensstufe (f) mit dem Abgas aus dem System der zirkulierenden Wirbelschicht abgeführte zinkhaltige Material auf eine Temperatur von 200 bis 250°C gekühlt wird, Material mit einer Korngröße > 10 µm abgeschieden und in die Granulierung gemäß Verfahrensstufe (a) zurückgeführt wird, Material mit einer Korngröße < 10 µm vom Abgas getrennt und mit Wasser versetzt wird und das Abgas nachverbrannt wird.

Die zu entfernenden Stoffe Zink-, Blei- und Alkalimetall-Verbindungen liegen nach dem zweiten Zyklon gasförmig vor. Das Abgas wird in einem Kühler durch direkt eingespritztes Wasser auf Temperaturen < 250°C abgekühlt. Die gasförmigen Zink-, Blei- und Alkalimetall-Verbindungen kondensieren hierbei. Das abgekühlte Abgas wird in einem nachgeschalteten Zyklon von Partikeln > 0,01 mm größtenteils befreit und mittels Gewebefiltern auf Werte < 10 mg/Nm³ entstaubt. Das im Zyklon abgeschiedene Material wird über ein Stopfschnecken-System ausgetragen und im Eingangsstrom den Reststoffen zugemischt und dann granuliert. In einem dem Zyklon nachgeschalteten Filter abgeschiedene Stäube werden heiß aus dem Druckraum ausgetragen und zum Weitertransport in einem absatzweise arbeitenden Mischaggregat unter Zugabe von Wasser agglomeriert. Das entstaubte Prozeßgas wird zur Energie/Dampfgewinnung nachverbrannt.

Eine vorteilhafte Ausgestaltung der Erfindung ist, daß ein Teil des aus dem Abgas im Filter abgeschiedenen Staubes in den Eingangsstrom des Filters zurückgeführt wird. Dadurch wird die Abscheidung von feinen Partikeln verbessert, da sich diese Partikel an dem abgeschiedenen Material gut agglomerieren und anlagern.

Die vorliegende Erfindung wird anhand einer Zeichnung und Beispielen näher erläutert.

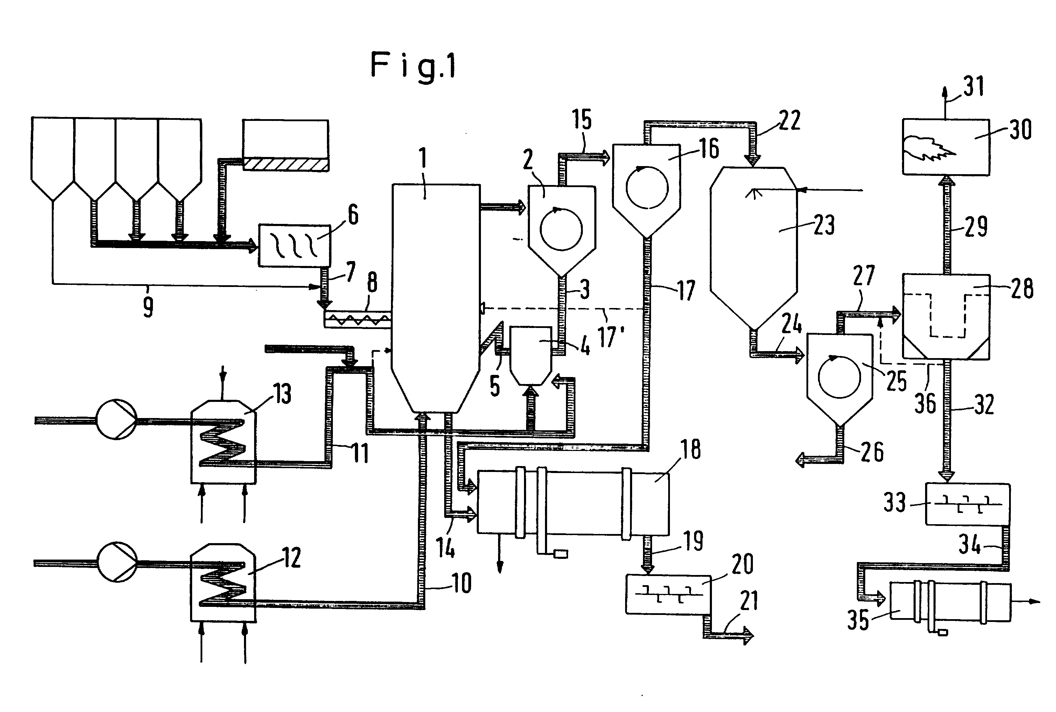

Die Zeichnung besteht aus Fig. 1.

Fig. 1 zeigt ein Verfahrensschema der vorliegenden Erfindung. Die zirkulierende Wirbelschicht besteht aus dem Wirbelschichtreaktor (1), dem Rückführzyklon (2) und der Rückführleitung (3). Die Rückführleitung (3) führt in die Wirbelschicht (4). Von der Wirbelschicht (4) führt eine Leitung (5) zum Einleiten von Sekundärgas in den Wirbelschichtreaktor (1). Die zink- und eisenoxidhaltigen Reststoffe werden nach einer Mikroagglomeration (6) über die Leitung (7) auf einen Schneckenförderer (8) geleitet. Kohle wird über die Leitungen (9) und (7) auf den Schneckenförderer (8) geleitet. Das Material wird über den Schneckenförderer (8) in den Wirbelschichtreaktor (1) eingeleitet. Das sauerstoffhaltige Gas wird über die Leitung (10) als Fluidisierungsgas in den Wirbelschichtreaktor (1) geleitet. Über die Leitung (11) wird sauerstoffhaltiges Gas in die Wirbelschicht (4) als Fluidisierungs- und Sekundärgas eingeleitet. Über die Leitung (11) kann auch Sekundärgas direkt in den Wirbelschichtreaktor (1) eingeleitet werden. Die in den Leitungen (10) und (11) geführten sauerstoffhaltigen Gase werden in den Wärmeaustauschern (12) und (13) vorgewärmt. Eisenoxidhaltiges Material wird aus dem Wirbelschichtreaktor (1) über die Leitung (14) ausgetragen. Zinkhaltiges Material wird aus dem Rückführzyklon (2) mit dem staubbeladenen Abgas über die Leitung (15) in den Abscheidezyklon (16) eingeleitet. Der im Abscheidezyklon (16) abgeschiedene Feststoff wird über die Leitung (17) abgeführt. Über die Leitungen (17) und (14) werden Feststoffe in einen wassergekühlten Drehrohrkühler (18) eingeleitet. Über die abgezweigte Leitung (17') kann ein Teil des Feststoffes in den Wirbelschichtreaktor (1) eingeleitet werden. Das gekühlte Material wird über die Leitung (19) in einen Mischer (20) geleitet und dort mit Wasser befeuchtet. Das befeuchtete Material wird über die Leitung (21) abgeführt. Das Abgas aus dem Abscheidezyklon (16) wird über die Leitung (22) in einen Verdampfungskühler (23) eingeleitet. Das abgekühlte Abgas wird über die Leitung (24) in einen Abscheidezyklon (25) eingeleitet. Der im Abscheidezyklon (25) abgeschiedene Feststoff wird über die Leitung (26) dem Granulator (6) zugeführt. Das Abgas aus dem Abscheidezyklon (25) wird über die Leitung (27) in einen Schlauchfilter (28) eingeleitet. Das Abgas aus dem Schlauchfilter (28) wird über die Leitung (29) in eine Nachbrennkammer (30) eingeleitet und von dort über die Leitung (31) abgeführt. Der im Schlauchfilter (28) abgeschiedene Feststoff wird über die Leitung (32) in einen Mischer (33) geleitet und dort mit Wasser befeuchtet. Das Material wird über die Leitung (34) vorzugsweise zur Herstellung von Wälzoxid in ein Wälzrohr (35) geleitet. Von der Leitung (32) kann Teilstrom (36) abgezogen und über die Leitung (27) in den Schlauchfilter (28) eingeleitet werden.

### Beispiele

### Beispiel 1:

Ein Gemisch aus Gichtschlamm, Konverterstaub und EGR-Staub aus einer Sinteranlage wurde in einer Granulierung zu Mikrogranalien mit 0,1 bis 3 mm Korngröße granuliert. Der Wassergehalt betrug 16,3 Gew.-%. Der Wirbelschichtreaktor (1) der zirkulierenden Wirbelschicht hatte eine Höhe von 15 m und einen Durchmesser von 3,6 m. Die Aufgabe betrug 23,5 t/h Mikrogranalien und 6,2 t/h Kohlen, die aus 10 % Koksgrus und 90 % Gasflammkohle mit 30 % flüchtigen Bestandteilen bestanden. Als im Wärmetauscher (12) vorgewärmtes Fluidisierungsgas wurden 13.000 Nm/h Luft mit 600°C in (1) eingeleitet. Als Sekundärgas wurden durch die leitung (5) 12.000 Nm³/h Luft mit 700°C eingeleitet. Die Temperatur im Wirbelschichtreaktor (1) betrug 1.020°C. Das Abgas nach dem Abscheidezyklon (16) betrug 39.500 Nm³/h und enthielt 11 % CO, 9 % CO₂, 10 % H₂, 15 % H₂O und 54 % N₂. In den Verdampfungskühler (23) wurden 18 t/h Wasser eingedüst. Die Austrittstemperatur des Gases aus dem Verdampfungskühler (23) betrug 220°C. 62.900 Nm³/h Abgas verließen das Filter (28). 2,3 t/h Staub mit 22 Gew.-% Zn + Pb, 20 Gew.-% C, 34 Gew.-% FeO und 10 Gew.-% Fe₂O₃ wurden im Verdampfungskühler (23) und Filter (28) abgeschieden. Aus dem Wirbelschichtreaktor (1) und dem Abscheidezyklon (16) wurden 23,2 t/h Feststoff mit 0,3 % Zn und 9,1 % C abgezogen.

### Beispiel 2:

Ein Gemisch aus Gichtschlamm, Konverterstaub und EGR-Staub aus einer Sinteranlage wurde in einer Granulierung zu Mikrogranalien mit 0,1 bis 3,0 mm Korngröße granuliert. Der Wassergehalt betrug 16 Gew.-%. Der Wirbelschichtreaktor (1) der zirkulierenden Wirbelschicht hatte eine Höhe von 15 m und einen Durchmesser von 3,6 m. Die Aufgabe betrug 23,5 t/h Mikrogranalien und 6,2 t/h Kohlen, die aus 10 % Koksgrus und 90 % Gasflammkohle mit 30 % flüchtigen Bestandteilen bestanden. Als im Wärmetauscher (12) vorgewärmtes Fluidisierungsgas wurden 13.000 Nm/h Luft mit 600°C in den Wirbelschichtreaktor (1) eingeleitet. In die zweite Wirbelschicht (4) wurden 12.000 Nm³/h Luft mit 700°C eingeleitet. Die Temperatur im Wirbelschichtreaktor (1) betrug 1.020°C. Die Temperatur in der zweiten Wirbelschicht (4) betrug ebenfalls 1.020°C. Das Abgas nach dem Abscheidezyklon (16) betrug 39.350 Nm³/h und enthielt 13 % CO, 10 % CO₂, 12 % H₂, 14 % H₂O und 50 % N₂. In den Verdampfungskühler (23) wurden 18 t/h Wasser eingedüst.

Die Austrittstemperatur des Gases aus dem Verdampfungskühler (23) betrug 230°C. 62.300 Nm³/h Abgas verließen das Filter (28). 2,6 t/h Staub mit 30 Gew.-% Zn, 9 Gew.-% Blei, 20 Gew.-% C, 6 Gew.-% FeO und 10 Gew.-% Fe₂O₃ wurden im Verdampfungskühler (23) und Filter (28) abgeschieden. Aus dem Wirbelschichtreaktor (1) und dem Abscheidezyklon (16) wurden 22,7 t/h Feststoff mit 0,09 Gew.-% Zn und 5,0 Gew.-% C abgezogen.

## Patentansprüche

1. Verfahren zur Aufarbeitung von zink- und eisenoxidhaltigem Reststoff, wobei
a) zink- und eisenoxidhaltiger Staub und/oder Schlamm mit Wasser granuliert wird,
b) Granalien gemäß Verfahrensstufe (a) und kohlenstoffhaltiges Material in ein System der zirkulierenden Wirbelschicht eingetragen werden,
c) die im System der zirkulierenden Wirbelschicht im Kreislauf geführte Gas-Feststoff-Suspension in eine zweite Wirbelschicht eingetragen wird,
d) der aus der zweiten Wirbelschicht ausgetragene Feststoff in den Reaktor der zirkulierenden Wirbelschicht zurückgeleitet wird,
e) 50 bis 75 Vol.-% des zur Vergasung des kohlenstoffhaltigen Materials erforderlichen Sauerstoffs als Fluidisierungsgas in den Reaktor der zirkulierenden Wirbelschicht und 25 bis 50 Vol.-% des Sauerstoffs als Fluidisierungs- und Sekundärgas in die zweite Wirbelschicht eingetragen werden,
f) eisenoxidhaltiges Material aus dem Reaktor der zirkulierenden Wirbelschicht ausgetragen und zinkhaltiges Material mit dem Abgas aus dem System der zirkulierenden Wirbelschicht abgeführt werden.

2. Verfahren nach Anspruch 1, wobei gemäß Verfahrensstufe (a) der Wassergehalt des eisenoxidhaltigen Staubs und/oder Schlamms vor der Granulierung auf < 13 Gew.-% eingestellt wird.

3. Verfahren nach den Ansprüchen 1 oder 2, wobei gemäß Verfahrensstufe (a) Granalien mit einer Korngröße von 0,1 bis 3,0 mm hergestellt werden.

4. Verfahren nach den Ansprüchen 1 bis 3, wobei die Granalien vor der Einleitung in den Reaktor der zirkulierenden Wirbelschicht auf einen Wassergehalt < 10 Gew.-% getrocknet werden.

5. Verfahren nach den Ansprüchen 1 bis 4, wobei die Menge des kohlenstoffhaltigen Materials 20 bis 30 Gew.-% des Gesamteintrags in den Reaktor der zirkulierenden Wirbelschicht beträgt.

6. Verfahren nach den Ansprüchen 1 bis 5, wobei gemäß Verfahrensstufe (b) die Temperatur im Reaktor der zirkulierenden Wirbelschicht auf 950 bis 1100°C, vorzugsweise 1000 bis 1050°C, eingestellt wird.

7. Verfahren nach den Ansprüchen 1 bis 6, wobei gemäß Verfahrensstufe (b) das Verhältnis CO/CO₂ im Reaktor der zirkulierenden Wirbelschicht auf 1,1 bis 1,5, vorzugsweise 1,2 bis 1,4, eingestellt wird.

8. Verfahren nach den Ansprüchen 1 bis 7, wobei im System der zirkulierenden Wirbelschicht der stündliche Feststoffumlauf mindestens das 5-fache des im Reaktor befindlichen Feststoffgewichts beträgt.

9. Verfahren nach den Ansprüchen 1 bis 8, wobei gemäß Verfahrensstufe (c) 70 bis 80 Gew.-% des kohlenstoffhaltigen Materials in die zweite Wirbelschicht eingetragen werden.

10. Verfahren nach den Ansprüchen 1 bis 9, wobei das gemäß Verfahrensstufe (f) aus dem Reaktor der zirkulierenden Wirbelschicht ausgetragene Material auf eine Temperatur von < 150°C gekühlt wird und das gekühlte Material mit Wasser versetzt wird.

11. Verfahren nach den Ansprüchen 1 bis 10, wobei das gemäß Verfahrensstufe (f) mit dem Abgas aus dem System der zirkulierenden Wirbelschicht abgeführte zinkhaltige Material auf eine Temperatur von 200 bis 250°C gekühlt wird, Material mit einer Korngröße > 10 µm abgeschieden und in die Granulierung gemäß Verfahrensstufe (a) zurückgeführt wird, Material mit einer Korngröße < 10 µm vom Abgas getrennt und mit Wasser versetzt wird und das Abgas nachverbrannt wird.

12. Verfahren nach den Ansprüchen 1 bis 11, wobei ein Teil des aus dem Abgas im Filter abgeschiedenen Staubes in den Eingangsstrom des Filters zurückgeführt wird.

## Claims

1. A method for reprocessing residual material containing zinc and iron oxide, wherein
a) dust and/or sludge containing zinc and iron oxide is granulated with water,
b) granules according to method step (a) and carbon-containing material are introduced into a circulating fluidised bed system,
c) the gas/solids suspension circulated in the circulating fluidised bed system is introduced into a second fluidised bed,
d) the solids discharged from the second fluidised bed are returned into the reactor of the circulating fluidised bed,
e) 50 to 75% by volume of the oxygen required for gasification of the carbon-containing material is introduced as fluidising gas into the reactor of the circulating fluidised bed and 25 to 50% by volume of the oxygen is introduced as fluidising and secondary gas into the second fluidised bed,
f) material containing iron oxide is discharged from the reactor of the circulating fluidised bed and zinc-containing material is discharged with the exhaust gas from the circulating fluidised bed system.

2. A method according to Claim 1, wherein in method step (a) the water content of the dust and/or sludge containing iron oxide is set to < 13% by weight before granulation.

3. A method according to Claims 1 or 2, wherein in method step (a) granules having a grain size of 0.1 to 3.0 mm are produced.

4. A method according to Claims 1 to 3, wherein the granules are dried to a water content of < 10% by weight before introduction into the reactor of the circulating fluidised bed.

5. A method according to Claims 1 to 4, wherein the quantity of carbon-containing material is 20 to 30% by weight of the total amount introduced into the reactor of the circulating fluidised bed.

6. A method according to Claims 1 to 5, wherein in method step (b) the temperature in the reactor of the circulating fluidised bed is set to 950 to 1100°C, preferably 1000 to 1050°C.

7. A method according to Claims 1 to 6, wherein in method step (b) the ratio of CO/CO₂ in the reactor of the circulating fluidised bed is set to 1.1 to 1.5, preferably 1.2 to 1.4.

8. A method according to Claims 1 to 7, wherein the hourly circulation of solids in the system of the circulating fluidised bed is at least five times the weight of solids in the reactor.

9. A method according to Claims 1 to 8, wherein in method step (c) 70 to 80% by weight of the carbon-containing material is introduced into the second fluidised bed.

10. A method according to Claims 1 to 9, wherein the material discharged from the reactor of the circulating fluidised bed in accordance with method step (f) is cooled to a temperature of < 150°C and water is added to the cooled material.

11. A method according to Claims 1 to 10, wherein the zinc-containing material removed with the exhaust gas from the system of the circulating fluidised bed in accordance with method step (f) is cooled to a temperature of 200 to 250°C, material having a grain size of > 10 µm is separated off and is returned to the granulation stage of method step (a), material having a grain size of < 10 µm is separated off from the exhaust gas and water is added thereto, and the exhaust gas is after-burned.

12. A method according to Claims 1 to 11, wherein part of the dust separated off from the exhaust gas in the filter is returned to the incoming stream of the filter.

## Revendications

1. Procédé de traitement de matières résiduelles contenant du zinc et de l'oxyde de fer, dans lequel
a) on granule de la poussière et/ou de la boue contenant du zinc et de l'oxyde de fer avec de l'eau,
b) on introduit des grenailles conformes à l'étape de procédé (a) et un matériau contenant du carbone dans un système de couche fluidisée circulante,
c) on introduit la suspension de gaz-solide, maintenue en circulation dans le système de couche fluidisée circulante, dans une deuxième couche fluidisée,
d) on recycle la matière solide évacuée de la deuxième couche fluidisée dans le réacteur à couche fluidisée circulante,
e) on introduit 50 à 75 % en volume de l'oxygène nécessaire pour la gazéification du matériau contenant du carbone à titre de gaz de fluidisation dans le réacteur à couche fluidisée circulante et 25 à 50 % en volume de l'oxygène à titre de gaz de fluidisation et de gaz secondaire dans la deuxième couche fluidisée,
f) on évacue le matériau contenant de l'oxyde de fer du réacteur à couche fluidisée circulante et on élimine le matériau contenant du zinc avec le gaz effluent provenant du système de couche fluidisée circulante.

2. Procédé selon la revendication 1, dans lequel, conformément à l'étape de procédé (a), on règle la teneur en eau de la poussière et/ou de la boue contenant de l'oxyde de fer avant la granulation à une valeur inférieure à 13 % en poids.

3. Procédé selon les revendications 1 ou 2, dans lequel, conformément à l'étape de procédé (a), on produit des grenailles avec une granulométrie de 0,1 à 3,0 mm.

4. Procédé selon les revendications 1 à 3, dans lequel les grenailles sont séchées avant l'introduction dans le réacteur à couche fluidisée circulante à une teneur en eau inférieure à 10 % en poids.

5. Procédé selon les revendications 1 à 4, dans lequel la quantité du matériau contenant du carbone représente 20 à 30 % en poids de l'introduction totale dans le réacteur à couche fluidisée circulante.

6. Procédé selon les revendications 1 à 5, dans lequel, conformément à l'étape de procédé (b), on règle la température dans le réacteur à couche fluidisée circulante à 950 à 1100 °C, de préférence à 1000 à 1050 °C.

7. Procédé selon les revendications 1 à 6, dans lequel, conformément à l'étape de procédé (b), on règle le rapport CO/CO₂ dans le réacteur à couche fluidisée circulante à 1,1 à 1,5, de préférence à 1,2 à 1,4.

8. Procédé selon les revendications 1 à 7, dans lequel, dans le système de couche fluidisée circulante, le recyclage horaire des matières solides représente au moins le quintuple de la masse des matières solides se trouvant dans le réacteur.

9. Procédé selon les revendications 1 à 8, dans lequel, conformément à l'étape de procédé (c), on introduit 70 à 80 % en poids du matériau contenant du carbone dans la deuxième couche fluidisée.

10. Procédé selon les revendications 1 à 9, dans lequel le matériau évacué du réacteur à couche fluidisée circulante, conformément à l'étape de procédé (f), est refroidi à une température inférieure à 150 °C et le matériau refroidi est mélangé à de l'eau.

11. Procédé selon les revendications 1 à 10, dans lequel le matériau contenant du zinc évacué avec le gaz effluent du système de couche fluidisée circulante, conformément à l'étape de procédé (f), est refroidi à une température de 200 à 250 °C, le matériau avec une granulométrie supérieure à 10 µm est isolé et recyclé vers la granulation conformément à l'étape de procédé (a), le matériau avec une granulométrie inférieure à 10 µm est séparé du gaz effluent et mélangé à de l'eau et le gaz effluent est soumis à une postcombustion.

12. Procédé selon les revendications 1 à 11, dans lequel une partie de la poussière du gaz effluent, déposée dans le filtre, est recyclée dans le flux d'alimentation du filtre.
